(19) Europäisches Patentamt
European Patent Office
Office européen des brevets

(11) **EP 1 710 898 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(21) Anmeldenummer: **06006840.0**

(22) Anmeldetag: **31.03.2006**

(51) Int Cl.:
***H02M 3/315*** *(2006.01)*

(54) **Umschaltbarer Spannungswandler**

Switchable voltage converter

Convertisseur de tension commutable

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.04.2005 DE 102005016047**

(43) Veröffentlichungstag der Anmeldung:
**11.10.2006 Patentblatt 2006/41**

(73) Patentinhaber: **Osram Gesellschaft mit beschränkter Haftung**
**81543 München (DE)**

(72) Erfinder: **Storm, Arwed**
**85221 Dachau (DE)**

(56) Entgegenhaltungen:
**WO-A-01/47324        WO-A-02/41480**
**US-B1- 6 465 991**

EP 1 710 898 B1

## Beschreibung

## Technisches Gebiet

Die Erfindung betrifft einen umschaltbaren Spannungswandler, der in getakteten Stromversorgungen einsetzbar ist. Weiterhin betrifft die Erfindung ein Betriebsgerät zum Betrieb von Lampen mit einem erfindungsgemäßen Spannungswandler.

## Stand der Technik

Bei getakteten Stromversorgungen sind die Topologien Boost-Konverter und SEPIC (Single Ended Primary Inductance Converter) allgemein bekannt. Insbesondere bei zweistufigen Betriebgeräten für Entladungslampen sind diese Konvertertypen in der ersten Stufe weit verbreitet. Die erste Stufe bewerkstelligt eine Leistungsfaktorkorrektur und stellt eine Zwischenkreisspannung bereit, während eine zweite Stufe in der Regel eine hochfrequente Wechselspannung zur Speisung der Entladungslampe erzeugt. Den Takt in den beiden getakteten Stromversorgungen bewerkstelligt ein elektronischer Schalter, der gegenüber einer Netzfrequenz mit einer hohen Frequenz schaltet.

In der Schrift WO 02/41480 (Chang) werden die jeweiligen Vor- und Nachteile der beiden Konvertertypen diskutiert. Der wesentliche Vorteil des Boost-Konverters besteht im hohen Wirkungsgrad, während ein Nachteil die untere Begrenzung der Ausgangsspannung auf den Spitzenwert der Eingangsspannung ist. Die Eigenschaften des SEPIC sind entgegengesetzt gelagert: Vorteilhaft ist seine Ausgangsspannung unabhängig von der Eingangsspannung wählbar, während sein Wirkungsgrad deutlich niedriger liegt als beim Boost-Konverter.

Die Schrift WO 02/41480 (Chang) beschreibt nun einen Spannungswandler, dessen Topologie umschaltbar ist. Je nach Stellung eines Umschalters arbeitet der offenbarte Spannungswandler entweder als Boost-Konverter in einem Boost-Modus oder als SEPIC in einem SEPIC-Modus.

Der in der Schrift WO 02/41480 (Chang) offenbarte Spannungswandler hat folgende Nachteile:

Zum Umschalten zwischen den Topologien ist ein Umschalter mit 3 Polen nötig. Dies ist zwar mit mechanischen Schaltern realisierbar, eine Realisierung mit Halbleiter-Schaltern ist jedoch aufwendig, da zwei Schalter benötigt werden. Zudem müssen diese beiden Schalter synchronisiert sein.

Die bekannte SEPIC Topologie benötigt zwei Drosseln, während die verbreitete Topologie des Boost-Konverters nur eine Drossel benötigt. Ein weiterer Nachteil des in WO 02/41480 (Chang) beschriebenen Spannungswandlers besteht nun darin, dass im Boost-Modus eine Drossel, die für den SEPIC benötigt wird, abgeschaltet wird. Die stillgelegte SEPIC Drossel hat im Boost-Modus keine Funktion. Dies hat zur Folge, dass die Drossel, die sowohl im SEPIC- als auch im Boost-Modus aktiv ist, bei gleicher Leistungsabgabe am Ausgang des Spannungswandlers unterschiedliche Belastung in den beiden Modi erfährt. Diese Drossel muss so dimensioniert werden, dass die maximal speicherbare Energie dieser Drossel im Boost-Modus nicht überschritten wird. Für den SEPIC-Modus ist diese Drossel dann überdimensioniert. Dies führt dazu, dass der umschaltbare Spannungswandler teurer ist als der nicht umschaltbare Konverter in dessen Modus er gerade arbeitet. Dies nicht nur wegen der Schalter zum Umschalten der Modi, sondern auch, weil im Boost-Modus die SEPIC-Drossel nutzlos abgeschaltet ist und im SEPIC-Modus die dem Eingang zugewandte Drossel überdimensioniert ist.

## Darstellung der Erfindung

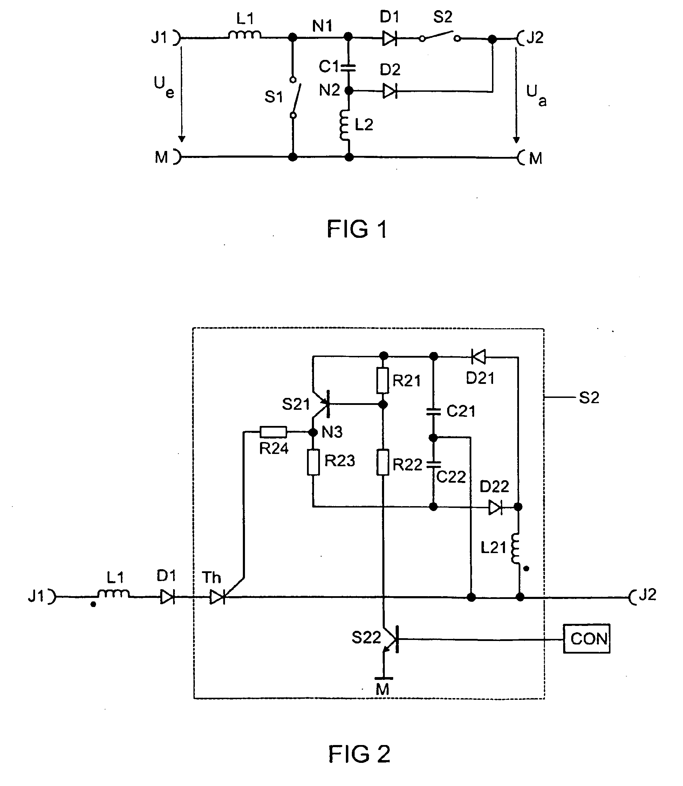

Es ist Aufgabe der vorliegenden Erfindung, einen umschaltbaren Spannungswandler bereitzustellen, der gegenüber dem Stand der Technik kostenreduziert ist. Erfindungsgemäß wird dies durch einen umschaltbaren Spannungswandler erreicht, der nur einen einfachen Schalter zum Umschalten der Modi benötigt. Weiterhin wird die Aufgabe der vorliegenden Erfindung dadurch gelöst, dass der Boost-Konverter im Boost-Modus eine Topologie aufweist, die der Topologie eines sog. Boost-Konverters mit Ripple-Strom-Kompensation entspricht. Diese ist beispielsweise in folgender Literatur beschrieben: Jing Wang; Dunford, W.G.; Mauch, K.: "Analysis of a ripple-free input-current boost converter with discontinuous conduction characteristics", IEEE Transactions on Power Electronics, Vol.12, Iss.4, Jul 1997, pp 684-694. Figur 2 dieser Literaturstelle zeigt die Topologie des Boost-Konverters mit Ripple-Strom-Kompensation.

Bei der Ripple-Strom-Kompensation ist parallel zum elektronischen Schalter des Boost-Konverters die Serienschaltung einer zweiten Drossel und eines Kondensators geschaltet. Hochfrequenter Strom (Ripple-Strom) fließt im wesentlichen in der zweiten Drossel, während in einer ersten Drossel, die mit dem Eingang des Spannungswandlers gekoppelt ist, im Vergleich zur zweiten Drossel nur wenig hochfrequenter Strom fließt, wodurch Funkstörungen reduziert werden. Völlige Kompensation des hochfrequenten Stroms in der ersten Drossel ist durch eine magnetische Kopplung der ersten und der zweiten Drossel möglich. Die beiden Drosseln können so dimensioniert werden, dass jede nur die Hälfte der maximalen Energiespeicherfähigkeit aufweisen muss, wie die alleinige Drossel eines Booster-Konverters ohne Ripple-Strom-Kompensation. Der Zusatzaufwand für Drosseln ist somit beim Boost-Konverter mit Ripple-Strom-Kompensation gegenüber dem Boost-Konverter ohne Ripple-Strom-Kompensation gering.

Vom Verbindungspunkt der oben genannten Serienschaltung aus zweiter Drossel und Kondensator ist erfindungsgemäß eine zweite Diode zum Ausgang des Spannungswandlers geschaltet. Im Booster-Modus ist diese Diode immer in Sperrrichtung gepolt und somit ohne Wirkung. In Serie zu einer ersten Diode, die die bekannte Booster-Diode darstellt ist ein Modus-Schalter geschaltet. Ist der Modus-Schalter geschlossen, so arbeitet der Spannungswandler im Booster-Modus. Ist der Modus-Schalter geöffnet, so ist die erste Diode wirkungslos und mit Hilfe der zweiten Diode arbeitet der Spannungswandler im SEPIC-Modus. Dabei werden die erste und die zweite Drossel in magnetischer Hinsicht genauso genutzt wie im Boost-Modus. Die Drosseln können somit für einen Modus optimiert werden und sind damit gleichermaßen auch für den anderen Modus optimiert.

Zum Abschalten der Booster-Diode ist nur ein einfacher Schalter nötig. In den beiden Modi ist jeweils nur eine Diode ohne Wirkung und die beiden Drosseln werden in beiden Modi optimal genutzt. Damit ist der Aufwand des geschalteten Spannungswandlers gegenüber dem Stand der Technik deutlich reduziert und sogar nur unwesentlich größer als der Aufwand für die nicht geschalteten separaten Konverter.

Ein weiterer Aspekt der vorliegenden Erfindung betrifft die Realisierung des Modus-Schalters. Vorteilhaft wird er mit einem Thyristor ausgeführt, der von einer Ansteuerschaltung getriggert wird, die ein Über-Kopf-Zünden des Thyristors unterbindet. Dies geschieht durch Anlegen einer negativen Spannung an das Gate des Thyristors, solange er nicht gezündet werden soll, wobei die negative Spannung aus einer Hilfsdrossel gewonnen wird, die mit der ersten Drossel magnetisch gekoppelt ist.

## Kurze Beschreibung der Zeichnungen

Im folgenden soll die Erfindung anhand von Ausführungsbeispielen unter Bezugnahme auf Zeichnungen näher erläutert werden. Es zeigen:

Figur 1   ein Ausführungsbeispiel für einen erfindungsgemäßen umschaltbaren Spannungswandler,

Figur 2   ein Ausführungsbeispiel eines Modus-Schalters für einen erfindungsgemäßen umschaltbaren Spannungswandler.

Im folgenden werden Widerstände durch den Buchstaben R, Schalter durch den Buchstaben S, Dioden durch den Buchstaben D, Kondensatoren durch den Buchstaben C, Knoten durch den Buchstaben N, Anschlüsse durch den Buchstaben J und Drosseln durch den Buchstaben L jeweils gefolgt von einer Zahl bezeichnet. Auch werden im folgenden für gleiche und gleichwirkende Elemente der verschiedenen Ausführungsbeispiele durchweg gleiche Bezugszeichen verwendet.

## Bevorzugte Ausführung der Erfindung

Figur 1 zeigt ein Ausführungsbeispiel für einen erfindungsgemäßen umschaltbaren Spannungswandler. Zwischen einer Eingangsklemme J1 und einem Bezugspotenzial M ist eine Serienschaltung einer ersten Drossel L1 und eines elektronischen Schalters S1 geschaltet, wobei sich am Verbindungspunkt ein erster Knoten N1 bildet. Zwischen der Eingangsklemme J1 und dem Bezugspotenzial M ist der Spannungswandler von einer Energiequelle speisbar, die an J1 eine Eingangsspannung Ue erzeugt. Im allgemeinen handelt es sich bei der Energiequelle um eine gleichgerichtete Netzspannung. Gegebenenfalls ist noch ein Filter zur Reduzierung von Funkstörungen oder gegen Überspannung zwischengeschaltet.

Parallel zum elektronischen Schalter S1 ist eine Serienschaltung eines ersten Kondensators C1 und einer zweiter Drossel L2 geschaltet, wobei sich am Verbindungspunkt von erstem Kondensators C 1 und zweiter Drossel L2 ein zweiter Knoten N2 bildet. Durch diese Serienschaltung ist die oben besprochene Ripple-Strom Kompensation realisiert. Um die Kompensation zu verbessern können L1 und L2 magnetisch gekoppelt werden. Vorzugsweise werden für die Induktivität von L1 und L2 Werte gewählt, die von der magnetischen Kopplung k gemäß folgender Gleichung abhängen: $k = \sqrt{\dfrac{L2}{L1}}$,

wobei L1 größer oder gleich L2 sein soll.

Zwischen den ersten Knoten N1 und eine Ausgangsklemme J2 ist eine Serienschaltung einer ersten Diode D1 und eines Modus-Schalters S2 geschaltet, wobei die erste Diode D1 so gepolt ist, dass sie einen Stromfluss vom ersten Knoten N1 zur Ausgangsklemme J2 zulässt. Zwischen J2 und dem Bezugspotenzial liegt eine Ausgangsspannung Ua an. Sie wird im allgemeinen durch einen Speicherkondensator gepuffert, von dem eine Last Energie bezieht. Am Speicherkondensator liegt eine Zwischenkreisspannung an. Ein dem Spannungswandler nach geschalteter Wechselrichter kann aus der Zwischenkreisspannung eine hochfrequente Wechselspannung erzeugen, die zum Betrieb einer Entladungslampe dient.

Bei geschlossenem Modus-Schalter arbeitet der Spannungswandler als Boost-Konverter. Dies ist dann vorteilhaft wenn an J2 eine höhere Spannung benötigt wird, als an J anliegt.

Eine zweite Diode D2 ist mit ihrer Anode mit dem zweiten Knoten N2 und mit ihrer Kathode mit der Ausgangsklemme J2 verbunden. Damit kann der Spannungswandler als SEPIC arbeiten, wenn S2 geöffnet wird. Dies ist dann vorteilhaft wenn an J2 eine niedrigere Spannung benötigt wird, als an J1 anliegt.

Die Steuerung des Modusschalters S2 kann durch eine Steuereinrichtung erfolgen.

Die Steuereinrichtung bewirkt, dass der Modus-Schalter S2 geöffnet ist, falls die Spannung an der Eingangsklemme J 1 einen gegebenen Spannungsgrenzwert überschreitet.

Beim Betreiben von Entladungslampen kann der Modusschalter auch abhängig von der Spannung gesteuert werden, die eine zu betreibende Lampe am Ausgang J2 benötigt. Verlangt eine Lampe eine im Vergleich zur Spannung an der Eingangsklemme J 1 hohe Spannung, so ist der Modus-Schalter geschlossen und der Spannungswandler arbeitet im Boost-Modus. Bei vergleichsweise niedrigen Spannungen wird der Modus-Schalter geöffnet und der Spannungswandler arbeitet im SEPIC-Modus.

In Figur 2 ist ein Ausführungsbeispiel eines Modus-Schalters S2 für einen erfindungsgemäßen umschaltbaren Spannungswandler dargestellt. Schaltelement des Modus-Schalters S2 ist ein Thyristor Th, der von einer Ansteuerschaltung durch einen Steuerschalter S22 getriggert wird. Bei der Verwendung eines Thyristors muss darauf geachtet werden, dass er nicht durch eine bekannte, unerwünschte Über-Kopf-Zündung gezündet wird. Immer wenn der elektronische Schalter S 1 öffnet steigt die Spannung an der Anode des Thyristors schnell an und es besteht die Gefahr einer Über-Kopf-Zündung. Besonders hoch ist die Gefahr bei der Inbetriebnahme eines erfindungsgemäßen Spannungswandlers. Ein Speicherkondensator am Ausgang des Spannungswandlers ist bei der Inbetriebnahme noch entladen womit die Ausgangsspannung Ua Null ist. Damit ergibt sich eine hohe momentane Spannung zwischen Anode und Kathode des Thyristors und die Gefahr einer Über-Kopf-Zündung.

Um dies zu verhindern legt die Ansteuerschaltung am Gate des Thyristors Th bezüglich der Kathode des Thyristors Th immer dann eine negative Spannung an, falls der Steuerschalter (S22) geöffnet ist, d.h. keine Triggerung gewünscht ist.

Dies wird gemäß Figur 2 erreicht durch eine Hilfsdrossel L21, die mit ihrem ersten Anschluss galvanisch mit der Kathode des Thyristors Th gekoppelt ist, wobei die Hilfsdrossel L21 mit der ersten Drossel L1 derart magnetisch gekoppelt ist, dass an ihrem zweiten Anschluss eine negative Schutz-Spannung bezüglich ihres ersten Anschlusses anliegt, falls an der ersten,Drossel L1 eine negative Spannung bezüglich der Eingangsklemme J 1 anliegt.

Die negative Schutz-Spannung lädt über eine Diode D22 einen Kondensator C22. Die Spannung an C22 ist über eine Serienschaltung von Widerständen R23 und R24 zwischen Gate und Kathode des Thyristors geschaltet. Zwischen R23 und R24 bildet sich der Knoten N3.

Eine positive Spannung an der Hilfsdrossel lädt über eine Diode D21 einen Kondensator C21. Die Spannung an C21 wird über einen Hilfsschalter S21, den Knoten N3 und R24 zwischen Gate und Kathode des Thyristors geschaltet. Solange S21 geöffnet ist liegt also am Gate eine negative Spannung an, wodurch ein Über-Kopf-Zünden vermieden wird. Sobald S21 schließt wird der Thyristor Th durch die positive Spannung an C21 gezündet.

Im Ausführungsbeispiel nach Figur 2 wird der Hilfsschalter S21 von einem PNP Bipolartransistor gebildet, der mit dem Emitter an C21 und mit dem Kollektor mit dem Knoten N3 gekoppelt ist. Zwischen Basis und Emitter ist ein Widerstand R21 geschaltet. Der Steuerschalter S22 ist NPN Bipolartransistor der mit seinem Emitter am Bezugspotenzial M angeschlossen ist. Der Kollektor von S22 ist über einen Widerstand R22 mit der Basis von S21 verbunden. Die Basis von S22 ist mit einer Steuereinrichtung CON verbunden, die den Modus-Schalter S2 steuert.

Solange die Steuereinrichtung CON kein Signal abgibt ist S22 geöffnet, womit auch S21 geöffnet ist und am Gate des Thyristors eine negative Spannung anliegt. Der Spannungswandler arbeitet im SEPIC-Modus.

Schaltet die Steuereinrichtung CON den Steuerschalter S22 durch, so wird auch S21 durchgeschaltet und der Thyristor gezündet. Der Spannungswandler arbeitet dann im Boost-Modus.

Die Schaltungsanordnung bestehend aus R21, R22, R23, R24, S22 und S21 ist in der Literatur als Boostrap-Schaltung bekannt. Diese Schaltung findet Verwendung, wenn ein Schalter, dessen Ansteuersignal nicht massebezogen ist, wie im vorliegenden Fall das Gate des Thyristors, durch ein massebezogenes Signal einer Steuereinrichtung geschaltet werden soll. Dieses massebezogenes Signal kommt im vorliegenden Fall von der Steuereinrichtung CON. Die Boostrap-Schaltung in Figur 2 ist nur beispielhaft zu verstehen. In gleicher Weise können auch andere dem Fachmann geläufige Boostrap-Schaltungen Verwendung finden. Beispielsweise kann die Boostrap-Schaltung mit Feldeffekt-Transistoren aufgebaut sein oder die Potenzialdifferenz, die im Beispiel durch S22 überbrückt wird kann durch einen Übertrager überbrückt sein.

Wesentlich ist die Bereitstellung einer positiven und einer negativen Spannung an C21 und C22. Beliebig ist die Boostrap-Schaltung, die abhängig von der Steuereinrichtung CON entweder die positive oder die negative Spannung auf das Gate des Thyristors schaltet.

**Patentansprüche**

1.   Spannungswandler mit folgenden Merkmalen:

> • eine Eingangsklemme (J1) und eine Ausgangsklemme (J2),
> • ein Bezugspotenzial (M),
> • eine Serienschaltung einer ersten Drossel (L1) und eines elektronischen Schalters (S1) zwischen der Eingangsklemme (J1) und dem Bezugspotenzial (M), wobei sich am Verbindungspunkt ein erster Knoten (N1) bildet,
> • eine Serienschaltung eines ersten Kondensators (C1) und einer zweiten Drossel (L2) ist parallel zum elektronischen Schalter (S1) geschaltet, wobei sich am Verbindungspunkt von erstem Kondensators (C1) und zweiter Drossel (L2) ein zweiter Knoten (N2) bildet,
> • eine Serienschaltung einer ersten Diode (D1)

und eines Modus-Schalters (S2) ist zwischen den ersten Knoten (N1) und die Ausgangsklemme (J2) geschaltet, wobei die erste Diode (D1) so gepolt ist, dass sie einen Stromfluss vom ersten Knoten (N1) zur Ausgangsklemme (J2) zulässt,

• eine zweite Diode (D2) ist mit ihrer Anode mit dem zweiten Knoten (N2) und mit ihrer Kathode mit der Ausgangsklemme (J2) verbunden,

wobei der Spannungswandler bei geschlossenem Modus-Schalter (S2) als Boost-Konverter und bei geöffnetem Modus-Schalter (S2) als SEPIC-Konverter betreibbar ist.

2. Spannungswandler gemäß Anspruch 1, **gekennzeichnet durch** eine Steuereinrichtung (CON) zum Steuern des Modus-Schalters (S2), wobei die Steuereinrichtung bewirkt, dass der Modus-Schalter (S2) geöffnet ist, falls die Spannung an der Eingangsklemme (J1) einen gegebenen Spannungsgrenzwert überschreitet.

3. Betriebsgerät zum Betreiben von Entladungslampen mit einem Spannungswandler gemäß Anspruch 1 oder 2, **gekennzeichnet durch** eine Steuereinrichtung (CON), die bewirkt, dass der Modus-Schalter (S2) geöffnet ist, falls eine zu betreibende Entladungslampe an der Ausgangsklemme (J2) eine Zwischenkreisspannung benötigt, die unterhalb eines vorgegebenen Werts liegt.

4. Spannungswandler gemäß einem der obigen Ansprüche, **dadurch gekennzeichnet, dass** die erste und die zweite Drossel so dimensioniert sind, dass der Maximalwert der während des Betriebs des Spannungswandlers gespeicherten Energie in beiden Drosseln näherungsweise gleich ist, wobei dies unabhängig von der Stellung des Modus-Schalters gilt.

5. Spannungswandler gemäß Anspruch 4, **dadurch gekennzeichnet, dass** die erste und die zweite Drossel die gleiche Induktivität aufweisen.

6. Spannungswandler gemäß Anspruch 4 oder 5, **dadurch gekennzeichnet, dass** die erste und die zweite Drossel magnetisch gekoppelt sind.

7. Spannungswandler gemäß einem der vorigen Ansprüche,
   **dadurch gekennzeichnet, dass**
   der Modus-Schalter (S2) einen Thyristor (Th) und eine Ansteuerschaltung mit einem Steuerschalter (S22) umfasst, wobei die Ansteuerschaltung am Gate des Thyristors (Th) bezüglich der Kathode des Thyristors (Th) eine negative Spannung bewirkt, falls der Steuerschalter (S22) geöffnet ist.

8. Spannungswandler gemäß Anspruch 7, **dadurch gekennzeichnet, dass**
   die Ansteuerschaltung eine Hilfsdrossel (L21) umfasst, die mit ihrem ersten Anschluss galvanisch mit der Kathode des Thyristors (Th) gekoppelt ist, wobei die Hilfsdrossel (L21) mit der ersten Drossel (L 1) derart magnetisch gekoppelt ist, dass an ihrem zweiten Anschluss eine negative Schutz-Spannung bezüglich ihres ersten Anschlusses anliegt, falls an der ersten Drossel (L1) eine negative Spannung bezüglich der Eingangsklemme (J1) anliegt.

9. Spannungswandler gemäß Anspruch 8, **dadurch gekennzeichnet, dass**
   der Steuerschalter einen Steuereingang aufweist der eine Spannung bezüglich dem Bezugspotenzial (M) auswertet, wobei das Schließen das Steuerschalters ein Schließen eines Hilfsschalters (S21) bewirkt, wodurch zwischen Gate und Kathode des Thyristors (Th) eine Triggerspannung aufgeschaltet ist.

10. Spannungswandler gemäß Anspruch 9, **dadurch gekennzeichnet, dass**
    die Hilfsdrossel (L21) über jeweils eine Diode (D21, D22) jeweils einen Hilfskondensator (C21, C22) auf die Triggerspannung beziehungsweise die Schutz-Spannung auflädt.

**Claims**

1. Voltage converter having the following features:

   • an input terminal (J1) and an output terminal (J2),
   • a reference potential (M),
   • a series circuit comprising a first inductor (L1) and an electronic switch (S1) between the input terminal (J1) and the reference potential (M), a first node (N1) being formed at the connection point,
   • a series circuit comprising a first capacitor (C1) and a second inductor (L2) is connected in parallel with the electronic switch (S1), a second node (N2) being formed at the connection point between the first capacitor (C1) and the second inductor (L2),
   • a series circuit comprising a first diode (D1) and a mode switch (S2) is connected between the first node (N1) and the output terminal (J2), the first diode (D1) having such a polarity that it allows a current to flow from the first node (N1) to the output terminal (J2),
   • a second diode (D2) is connected with its anode to the second node (N2) and with its cathode to the output terminal (J2),

the voltage converter being operated as a boost converter when the mode switch (S2) is closed and as a SEPIC converter when the mode switch (S2) is open.

2. Voltage converter according to Claim 1, **characterized by** a control device (CON) for the purpose of controlling the mode switch (S2), the control device causing the mode switch (S2) to open if the voltage at the input terminal (J1) exceeds a given limit voltage value.

3. Operating device for operating discharge lamps having a voltage converter according to Claim 1 or 2, **characterized by** a control device (CON) which causes the mode switch (S2) to open if a discharge lamp to be operated requires an intermediate circuit voltage at the output terminal (J2) which is below a predetermined value.

4. Voltage converter according to one of the above claims, **characterized in that** the first inductor and the second inductor are dimensioned such that the maximum value of the energy stored during operation of the voltage converter in the two inductors is approximately the same, this being independent of the position of the mode switch.

5. Voltage converter according to Claim 4, **characterized in that** the first inductor and the second inductor have the same inductance.

6. Voltage converter according to Claim 4 or 5, **characterized in that** the first inductor and the second inductor are magnetically coupled.

7. Voltage converter according to one of the preceding claims, **characterized in that** the mode switch (S2) comprises a thyristor (Th) and a drive circuit having a control switch (S22), the drive circuit bringing about a negative voltage at the gate of the thyristor (Th) with respect to the cathode of the thyristor (Th) if the control switch (S22) is open.

8. Voltage converter according to Claim 7, **characterized in that** the drive circuit comprises an auxiliary inductor (L21) which is DC-coupled with its first connection to the cathode of the thyristor (Th), the auxiliary inductor (L21) being magnetically coupled to the first inductor (L1) such that a negative protective voltage with respect to its first connection is present at its second connection if a negative voltage with respect to the input terminal (J1) is present at the first inductor (L1).

9. Voltage converter according to Claim 8, **characterized in that** the control switch has a control input which evaluates a voltage with respect to the reference potential (M), in which case closing of the control switch causes an auxiliary switch (S21) to close, as a result of which a trigger voltage is applied between the gate and the cathode of the thyristor (Th).

10. Voltage converter according to Claim 9, **characterized in that** the auxiliary inductor (L21) charges in each case one auxiliary capacitor (C21, C22) to the trigger voltage or the protective voltage via in each case one diode (D21, D22).

**Revendications**

1. Convertisseur de tension ayant des caractéristiques suivantes :

   • Une borne ( J1 ) d'entrée et une borne ( J2 ) de sortie,
   • Un potentiel ( M ) de référence,
   • Un circuit série composé d'une première bobine ( L1 ) et d'un commutateur ( S1 ) électronique entre la borne ( J1 ) d'entrée et le potentiel ( M ) de référence, un premier noeud ( N1 ) se formant au point de liaison,
   • Un circuit série composé d'un premier condensateur ( C1 ) et d'une deuxième bobine ( L2 ) est monté en parallèle au commutateur ( S1 ) électronique, un deuxième noeud ( N2 ) se formant au point de liaison du premier condensateur ( C1 ) et de la deuxième bobine ( L2 ),
   • Un circuit série composé d'une première diode ( D1 ) et d'un commutateur ( S2 ) de mode est monté entre le premier noeud ( N1 ) et la borne ( J2 ) de sortie, la première diode ( D1 ) étant polarisée de manière à autoriser un flux de courant du premier noeud ( N1 ) à la borne ( J2 ) de sortie,
   • Une deuxième diode ( D2 ) est reliée par son anode au deuxième noeud ( N2 ) et par sa cathode à la borne ( J2 ) de sortie,

   le convertisseur de tension pouvant fonctionner, lorsque le commutateur ( S2 ) de mode est fermé, en convertisseur boost et, lorsque le commutateur ( S2 ) de mode est ouvert, en convertisseur SEPIC.

2. Convertisseur de tension suivant la revendication 1, **caractérisé par** un dispositif ( CON ) de commande pour commander le commutateur ( S2 ) de mode, le dispositif de commande faisant que le commutateur ( S2 ) de mode est ouvert si la tension à la borne ( J1 ) d'entrée dépasse une valeur limite de tension donnée.

3. Appareil pour faire fonctionner des lampes à décharge, comprenant un convertisseur de tension suivant la revendication 1 ou 2, **caractérisé par** un dispositif ( CON ) de commande qui fait que le commutateur ( S2 ) de mode est ouvert, si une lampe à décharge devant fonctionner a besoin sur la borne ( J2 ) de sortie d'une tension de circuit intermédiaire, qui est inférieure à une valeur prescrite.

4. Convertisseur de tension suivant l'une des revendications précédentes, **caractérisé en ce que** la première et la deuxième bobines ont des dimensions telles que la valeur maximum de l'énergie emmagasinée par le fonctionnement du convertisseur de tension est à peu près égale dans les deux bobines, cela indépendamment de la position du commutateur de mode.

5. Convertisseur de tension suivant la revendication 4, **caractérisé en ce que** la première et la deuxième bobines ont la même inductance.

6. Convertisseur de tension suivant la revendication 4 ou 5, **caractérisé en ce que** la première et la deuxième bobines sont couplées magnétiquement.

7. Convertisseur de tension suivant 1"une des revendications précédentes, **caractérisé en ce que** le commutateur ( S2 ) de mode comprend un thyristor ( Th ) et un circuit de commande ayant un commutateur ( S22 ) de commande, le circuit de commande provoquant à la grille du thyristor ( Th ) une tension négative par rapport à la cathode du thyristor ( Th ), si le commutateur ( S22 ) de commande est ouvert.

8. Convertisseur de tension suivant la revendication 7, **caractérisé en ce que** le circuit de commande comprend une bobine ( L21 ) auxiliaire qui est couplée par sa première borne galvaniquement à la cathode du thyristor ( Th ) la bobine ( L21 ) auxiliaire est couplée magnétiquement à la première bobine ( L1 ) de façon à appliquer à sa deuxième borne une tension de protection négative par rapport à sa première borne, s'il s'applique sur la première bobine ( L1 ) une tension négative par rapport à la borne ( j1 ) d'entrée.

9. Convertisseur de tension suivant la revendication 8, **caractérisé en ce que** le commutateur de commande a une entrée de commande qui exploite une tension par rapport au potentiel ( M ) de référence, la fermeture du commutateur de commande provoquant une fermeture d'un commutateur ( S21 ) auxiliaire, grâce à quoi une tension de déclenchement est appliquée entre la grille et la cathode du thyristor ( Th ).

10. Convertisseur de tension suivant la revendication 9, **caractérisé en ce que** la bobine ( L21 ) auxiliaire charge par respectivement une diode ( D21, D22 ) respectivement un condensateur ( C21, C22 ) auxiliaire à la tension de déclenchement ou à la tension

de protection.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0241480 A, Chang

**In der Beschreibung aufgeführte Nicht-Patentliteratur**

- **JING WANG ; DUNFORD, W.G. ; MAUCH, K.** Analysis of a ripple-free input-current boost converter with discontinuous conduction characteristics. *IEEE Transactions on Power Electronics,* Juli 1997, vol. 12 (4), 684-694